# EUROPEAN PATENT APPLICATION

(11) **EP 4 269 524 A1**
(43) Date of publication of application: **01.11.2023**
(21) Application number: 22170035.4
(22) Date of filing: 26.04.2022
(51) Int. Cl.: C09J 7/38, C09J 5/00, G09F 3/10

(54) **HEAT-REMOVABLE LABEL**

(71) Applicant: UPM Raflatac Oy, 33310 Tampere (FI)
(72) Inventor: PIETARI, Ismo, 00130 Helsinki (FI); GRABINSKI, Karol, 00130 Helsinki (PL); SIDELNIK-PATEREWICZ, Marzena, 00130 Helsinki (PL); HUAMAN, Malgorzata, 00130 Helsinki (PL)
(74) Representative: Berggren Oy

(57) **Abstract**

The specification relates to a heat-removable label (1) comprising a face layer (2) and an adhesive layer (4), wherein the adhesive layer (4) comprises pressure sensitive adhesive and a heat-activatable filler. The heat-activatable filler is capable of reducing adhesion of the heat-removable label (1) when being activated, and the heat-removable label (1) is detachable from a surface of an item by exposing the heat-removable label adhered to the surface of the item to heat such that at the time of detachment, effective temperature experienced by the adhesive layer is at least 80 degrees C or more, the effective temperature being such that mechanical recyclability of material(s) of the face layer and/or the item is not endangered. Further, the specification relates to a label laminate and a linerless label web for providing the heat-removable label, as well as to uses of such. Still further, the specification concerns a combination of a heat-removable label and an item, as well as a method for removing a heat-removable label from a surface labelled, a method for manufacturing a label laminate and a method for manufacturing a linerless label web.

## Description

### Technical field

This specification relates to a heat-removable label, and to a label laminate and a linerless label web for providing the same, as well as to uses of such. Further, the specification concerns a combination of a heat-removable label and an item, as well as a method for removing a heat-removable label from a surface labelled, a method for manufacturing a label laminate and a method for manufacturing a linerless label web.

### Background

It is general practice to apply a label to a surface of a container or a package in order to provide decoration, identification and/or information, for example, on the contents of the container or the package.

The containers or packages are generally re-used or recycled and there is a need for labels which are easily removed from the surface of the container or the package before re-using or recycling.

Thus, new solutions for removable labels are needed in order to improve the recyclability of the labelled items or the label materials themselves. One trend being that label materials are designed to become ever thinner also places new requirements for label removal techniques and the disclosure aims to answer also these requirements lowering the energy consumption and generation of contaminated water in the removal process.

### Summary

It is an aim of this specification to provide a heat-removable label, which is easily and efficiently removable from the labelled surface for example in recycling process(es). Further, the heat-removable labels disclosed herein may be utilized in order to maximize quality of the final recycled material, as contamination of the recycled material caused by the label components is minimized or even excluded.

Heat removability in this context should be understood as thermally induced removability effect so that the thermally induced removability may be further supplemented with other additional means to remove the pressure sensitive label from the labelled item. The whole label removal process may be arranged as a dry process where the primary heat transfer process to remove the label is utilized via heated gas or heat radiation without significant amount of liquid transferred heat transfer. This process may be achieved without including any washing steps. In case of a washing step is used to assist the label removal, such washing step(s) are preferably arranged without use of traditional caustic washing liquid(s).

A heat-removable label comprising a face layer and an adhesive layer is provided. The adhesive layer comprises pressure sensitive adhesive and a heat-activatable filler. The heat-activatable filler is capable of reducing adhesion of the heat-removable label when being activated, and the heat-removable label is detachable from a surface of an item by exposing the heat-removable label adhered to the surface of the item to heat such that at the time of detachment, effective temperature experienced by the adhesive layer is at least 80 degrees C or more. The effective temperature is such that mechanical recyclability of material(s) of the face layer and/or the item is not endangered.

A label laminate for providing a heat-removable label is provided. The label laminate comprises a face layer, an adhesive layer and a release liner. The face layer is adjoined to the release liner via the adhesive layer. The adhesive layer comprises pressure sensitive adhesive and a heat-activatable filler, and the heat-activatable filler is capable of reducing adhesion of the heat-removable label when being activated. The heat-removable label is detachable from a surface of an item by exposing the heat-removable label adhered to the surface of the item to heat such that at the time of detachment, effective temperature experienced by the adhesive layer is at least 80 degrees C or more. The effective temperature is such that mechanical recyclability of material(s) of the face layer and/or the item is not endangered.

A method for manufacturing the label laminate as disclosed above is provided. The method comprises the following steps of:
- arranging a release liner or a face layer as a substrate,
- coating the substrate with a pressure sensitive adhesive so as to form an adhesive layer and
- laminating the release liner together with the face layer in such a way that the adhesive layer is arranged in between the face layer and the release liner,
wherein the method further comprises including a heat-activatable filler into the adhesive layer.

A linerless label web for providing the heat-removable label as disclosed above is provided. The linerless label web comprises a face layer and an adhesive layer. The adhesive layer comprises pressure sensitive adhesive and a heat-activatable filler. The heat-activatable filler is capable of reducing adhesion of the heat-removable label when being activated. The heat-removable label is detachable from a surface of an item by exposing the heat-removable label adhered to the surface of the item to heat such that at the time of detachment, effective temperature experienced by the adhesive layer is at least 80 degrees C or more. The effective temperature is such that mechanical recyclability of material(s) of the face layer and/or the item is not endangered.

A method for manufacturing the linerless label web as disclosed above is provided. The method comprises the following steps of:
- arranging a face layer as a substrate,
- coating the substrate with a pressure sensitive adhesive so as to form an adhesive layer, and
- including a heat-activatable filler into the adhesive layer.

A method for removing the heat-removable label as disclosed above from a surface of an item is provided. The method comprises exposing the heat-removable label adhered to the surface of the item to heat such that at the time of detachment, effective temperature experienced by the adhesive layer is at least 80 degrees C or more, the effective temperature being such that mechanical recyclability of material(s) of the face layer and/or the item is not endangered, so as to detach the heat-removable label from the surface of the item.

A labelled item comprising an item and the heat-removable label as disclosed above is provided. The heat-removable label is attached to a surface of the item through the adhesive layer of the heat-removable label.

Further, use of the heat-removable label for labelling an item, and use of the label laminate or the linerless label web for providing heat-removable labels are provided.

### Brief description of the drawings

- Fig. 1: illustrates, by way of an example, a 3D view of a heat-removable label according to an embodiment,
- Fig. 2: illustrates, by way of an example, a cross sectional view of cut heat-removable labels attached to a common release liner,
- Fig. 3: illustrates, by way of an example, a heat-removable label attached to an item,
- Fig. 4: illustrates, by way of an example, a heat-removable label removed from the surface of an item.

The figures are schematic. The figures are not in particular scale.

Any embodiments, examples or figures that are not directly according to the solution disclosed herein, are presented in order to enable better understanding of the disclosure and related areas.

### Detailed description

The solution is described in the following in more detail with reference to some embodiments, which shall not be regarded as limiting.

In this description and claims, the percentage values relating to an amount of a material are percentages by weight (wt.%) unless otherwise indicated. Unit of thickness expressed as microns corresponds to µm. Unit of temperature expressed as degrees C corresponds to °C. The following reference numbers and denotations are used in this specification:
- MRK1: graphics
- Sx, Sy, Sz: 3D coordinates
- 1: a (heat-removable) label
- 2: a face layer
- 4: an adhesive layer
- 6: a release liner
- 8: a label laminate
- 10: a backing material
- 12: a release layer
- 100: an item
- 101: a labelled item

A label is a piece of material to be applied onto items of different shapes and materials. An item may also be called an article. An item may be a package, such as a bottle. A label comprises at least a face material also referred to as a face stock, a face or a face layer. A typical way to adhere the label onto an article is by use of adhesive. The label comprising an adhesive layer is referred to as an adhesive label. The adhesive may comprise pressure sensitive adhesive (PSA). A label comprising pressure sensitive adhesive may be referred to as a pressure sensitive adhesive label. Pressure sensitive adhesive labels may be referred to as self-adhesive labels.

The labels comprising PSA can be adhered to most surfaces through an adhesive layer without the use of a secondary agent, such as a solvent, or heat to strengthen the bond. The PSA forms a bond when pressure is applied onto the label at ambient temperature (e.g. between 15 and 35 degrees C) or for cold applications even under freezing temperatures below 0 degrees C, adhering the label to the item to be labelled. Examples of pressure-sensitive adhesives include water based (water-borne) PSAs, solvent based PSAs and hot-melt PSAs. A label may further comprise other adhesive(s).

Face layer refers to a top layer or a top substrate of the label, also called as a face stock or a face material. In case of a plastic face material it may also be called a face film. The face layer may have a monolayer structure or a multilayer structure. The multilayer structure comprises at least two, for example three layers. Layers of the multilayer structure may be formed and combined together through a coextrusion process or the pre-existing layers may be laminated together into a multilayer structure using lamination adhesive(s). From sustainability perspective, natural fibre based face layers may be preferred over plastic ones.

The face layer is the layer that is adhered to the surface of an item during labelling through an adhesive layer. The face layer comprises an adhesive side and a print(able) side. The face layer may comprise e.g. print in order to provide information and/or visual effect, such as information of the content of the item labelled. Printable face layer is suitable for printing by any of the known printing methods, such as with gravure, flexographic process, offset, screen or letter-press. The printing may exist on a top surface, reverse side or both top and reverse side of the face layer. Further, the label may contain additional layers, for example top coatings or overlaminates to protect the top surface and/or print of the label against rubbing or other external stress. A label comprising a face layer, printing layer and an adhesive layer may be referred to as a printed label. Coating or additional layers, such as a primer, may enable enhancing compatibility of adjacent layers or parts of the label, for example adhesion between the layers. The primer may also act as a barrier preventing adhesive components from migrating into the face layer.

Release liner refers to a structure comprising a substrate and a release layer on a surface of the substrate contacting the adhesive in a label laminate. The substrate may also be called a backing material. The release liner may comprise a release coating. The release coating may comprise a release agent, for example a silicone or non-silicone based agent. The release agent is a chemical having low surface tension. The release agent may be used in order to prevent other materials from bonding to it and to provide a release effect. The release coating layer provides a non-adherent surface i.e. low adhesion and release effect against the adhesive layer. Release liners of the label laminates may serve one or more useful functions: they may be used as a carrier sheet onto which the adhesive is coated; they may protect the adhesive layer during storage and transportation; they may provide a support for labels during die-cutting and printing, and ultimately they may provide the release substrate carrying the labels for dispensing onto the items to be labelled. Release liner allows for efficient handling of individual labels after the labels are die-cut and the surrounding matrix is stripped up to the point wherein the individual labels are dispensed on a labelling line. During dispensing the release liner is peeled off and discarded.

Label laminate, also referred to as an adhesive label laminate refers to a product comprising a face layer, an adhesive layer and a release liner. In the label laminate the face layer is laminated together with the release liner having the adhesive layer in between, this adhesive layer typically comprising a pressure sensitive adhesive. The label laminate may be a continuous structure from which the individual labels may be die-cut.

Manufacturing process of label laminates and labels thereof typically comprises steps of providing a face stock and a release liner, applying an adhesive layer onto a surface of the face stock and/or onto a surface of the release liner and laminating the face stock with the release liner in such a way that the adhesive layer is arranged in between the face stock and the release liner in order to form a label laminate.

The label laminate may be converted, i.e. individual labels may be cut from the label laminate structure. After cutting, the labels may remain to be attached to a common release liner (i.e. the release liner remains uncut). Thus, a plurality of labels may remain to be attached to a common continuous release liner. This may be called a converted label web. Alternatively, the labels may be completely separate (i.e. also the release liner may be cut).

In the lamination process so-called machine rolls, the width of the rolls corresponding to the width of the manufacturing/laminating machine, are typically formed. The machine rolls may be slit, i.e. cut lengthwise to so-called customer rolls with smaller widths. The slitting typically involves unwinding the machine roll, then slitting the web and again winding the narrower webs into individual customer rolls. Alternatively, the slitting into customer rolls may be performed as a part of the label lamination process as an in-line process, or it may even be performed as part of the label laminate converting process, wherein the label laminate is die-cut (kiss cut) to form individual labels carried by continuous release liner.

The label may also be a so-called linerless label. The linerless label comprises a mono- or multilayer face and an adhesive layer on the face. Linerless label webs or labels are provided to users without the release liner over the adhesive layer. Elimination of release liners reduces the material costs of the labels but also avoids the disposal of the release liner after the labelling. Moreover, the exclusion of the release liner decreases the thickness in a roll of labels and more labels can be provided per roll.

In many cases VIP (variable information printing) linerless labels are paper face labels with direct thermal coating. There can also be pre-printed linerless labels as well carrying more traditional printing. Or the brand info could be pre-printed and then some variable info (dates, price, last day of use) might be VIP-printed just before labelling.

The label may be a so-called shrink label, wherein heat shrinkable polymeric face material(s) are seamed and rolled on or sleeved around labelled articles and shrunk around the items. Shrinkable labels may comprise additionally some pressure sensitive adhesive(s).

Labels may be used in wide variety of labelling applications and end-use areas, such as labelling of food, home and personal care products, industrial products, pharmaceutical and health care products, beverage and wine bottles, other consumables, logistic products etc. The surface of the labelled article may be for example plastic, glass, metal, or paper based. The labelled article may be for example a container, such as a bottle, jar, canister, can, tin or the like. The label may also be applied to semi-rigid or flexible packages used for e.g. packaging of food or for logistics, such as cardboard box or envelope. Examples of containers include glass bottles, metal bottles, polyethylene terephthalate (PET) bottles, and bottles made of polyolefin, such as high density polyethylene (HDPE) and polypropylene (PP). The label may surround the labelled article, such as a bottle, completely or partially. Labels enable providing information, such as product specification, on the labelled product(s). Information, e.g. print of a label, may comprise human-readable information, like image(s), logo(s), text, and/or machine readable information, like bar code(s), QR (Quick Response) code(s).

This disclosure aims to provide a label which is removable from a surface of an item, such as a package or a container, allowing efficient recycling of the item and/or the label materials. As an example, remnants or deposits of labels, such as adhesive, print ink, varnish and label face, may interfere the recycling process of certain materials, such as plastics, glass, paper or cardboard. Remnants may cause problems for example with colour, clarity and processability of the recycled PET. Paper labels in general may cause issues on plastic recycling due to the impurities from the paper fibres and the adhesive.

In addition to being able to reuse or recycle the package or container material itself, the label material itself may be recycled. For this end, the labels need to be removed and collected for recycling. For efficient recycling process, it is preferable that the labels once being removed from the package or the container no more show adhesiveness, i.e. are not sticky anymore.

For environmental reasons, the label removal process itself should also be sustainable with minimum energy and water consumption and causing low level of emissions or waste water. Preferably, the removal process should not involve use of caustic washing liquids which will require special consideration when being disposed after use.

These issues may be overcome and/or alleviated by the heat-removable label disclosed herein and especially when used without caustic washing processes of prior art.

### Label structure

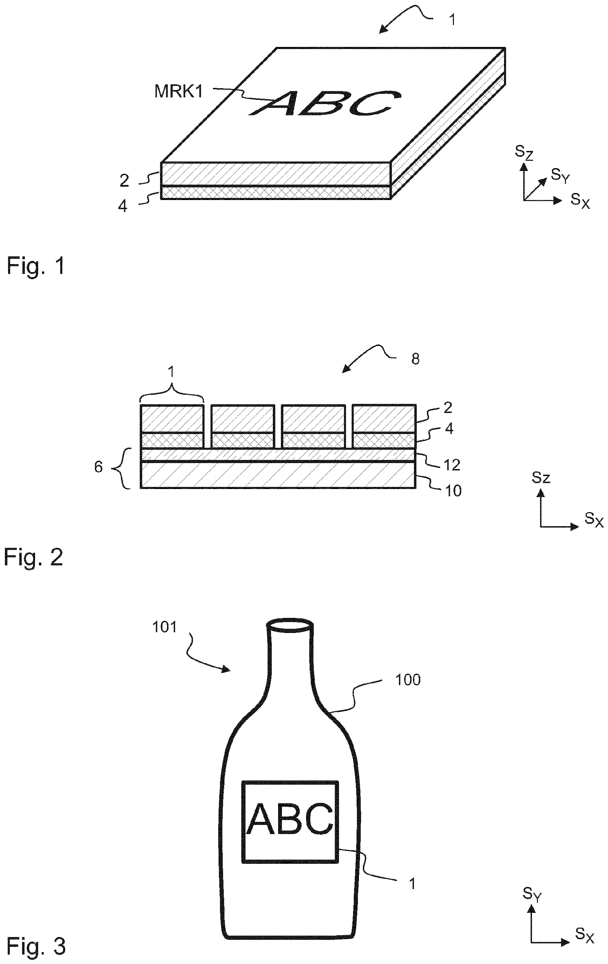

Referring to Fig. 1 a label 1, within context of this disclosure a heat-removable label, comprises a face layer 2 and an adhesive layer 4. The label 1 is attachable to an item 100 through the adhesive layer 4. Further the label 1 typically includes graphical patterns MRK1 on its face layer 2. During label manufacturing, continuous face layer 2 is laminated together with a release liner 6 having the adhesive layer 4 in between so as to provide a label laminate 8 from which the individual labels 1 can be cut. Label laminate 8 refers to a continuous structure comprising a face layer 2, an adhesive layer 4 and a release liner 6. Individual labels 1 may be die-cut from the continuous label laminate 8. A label laminate 8 illustrated in Fig. 2 comprises four cut labels 1 attached to a common release liner 6. The release liner 6 has a backing material 10 coated with a release layer 12. During labelling the release liner 6 is removed and the label 1 is attached onto a surface to be labelled through the adhesive layer 4.

Fig. 2 presents an example embodiment of a label laminate 8 comprising four cut labels 1 attached to a common release liner 6. The label laminate structure may comprise a face layer 2, a release liner 6 and an adhesive layer 4. The adhesive layer 4 is arranged between a release layer 12 of the release liner 6 and the face layer 2. Referring to Fig. 1, the label structure may further comprise printing as graphics MRK1. A top surface of the face layer 2 may be printed. The printing may be subsequently top coated in order to protect the printing. Alternatively or in addition, the reverse side of the face layer 2, adjacent to the adhesive layer 4, may be printed so that this print is visible through transparent adhesive layer 4 when release liner 6 is attached and label is not yet dispensed onto an article or is removed from the article. In some embodiments, the adhesive layer 4 may also be printable.

The label 1 may further comprise a primer layer. The primer layer may be arranged in between the face layer 2 and the adhesive layer 4. The primer layer may enhance compatibility of adjacent layers or parts of the label. The primer layer may enhance the adhesive anchorage to the face layer. The primer layer may also act as a barrier preventing adhesive components from migrating into the face layer. Depending on the recycling process in question, it may be preferable that after the label has been removed from the labelled item the adhesive still remains attached to the label face material. In recycling processes which include use of a washing liquid/solution this may facilitate easier collection of the label materials preventing contamination of the washing liquid/solution and alleviating need to refresh the liquid/solution.

According to an embodiment, a heat-removable label 1 is provided. The heat-removable label 1 comprises a face layer 2 and an adhesive layer 4. The adhesive layer 4 comprises pressure sensitive adhesive and a heat-activatable filler.

The heat-activatable filler is a substance that is arranged to be activated when being exposed to an elevated temperature. For example, the elevated temperature may be a temperature of at least 80 degrees C. The heat-activatable filler is used for reducing adhesion of the heat-removable label when being activated.

The heat-activatable filler is responsible for heat induced adhesion change. The adhesion change is reduction of adhesion. Adhesion may be reduced via inducing a change in tackiness of the pressure sensitive adhesive of the label. Preferably, adhesion of the label to the surface labelled is reduced substantially, even more preferably adhesion is entirely lost by the action of heat.

The heat induced adhesion change caused by the heat-activatable filler is irreversible.

The adhesive of the label may be a permanent type of pressure sensitive adhesive which without the heat-activatable filler does not significantly lose its adhesion when exposed to higher temperatures.

Furthermore, the adhesive of the label may be a removable type pressure sensitive adhesive which even without the heat-activatable filler experiences certain loss in its adhesion when exposed to higher temperatures, such as when exposed to hot air or steam or immersed in hot water washing solution without further alkaline and/or detergent and/or cleaning components.

Basically for all adhesives exposure to higher temperature causes reduction in adhesiveness. However, in the present solution the heat-activatable filler is responsible for enabling clean removability. This means that the label is removable from the labelled item such that no adhesive residue is left on the surface of the item after the detachment. Further, the reduction or loss of adhesiveness is irreversible when using the heat-activatable filler.

In some cases it may be preferable to adjust the amount of the heat-activatable filler so that the adhesion is reduced just enough to cause the label to detach from the surface labelled. For example, incorporation of excessive amount of heat-activatable filler may deteriorate the performance of the adhesive in other respects, such as anchorage or tackiness.

The amount of the heat-activatable filler in the adhesive layer may be adjusted so that when the label is exposed to dry heat, the label becomes removed without significant further mechanical (blowing, brushing) or liquid (washing, jetting) aids. On the other hand, the amount of the heat-activatable filler in the adhesive layer may be chosen such that it will significantly help the removal of the label but the removal might still require moderate amount of mechanical (blowing, brushing) or liquid (washing, jetting) aids. However, these aids should be able to be implemented with low energy and pollution levels and without generating, for example, significant amounts of contaminated waste water.

Within context of this specification, the heat-activatable filler is arranged to expand when exposed to heat, i.e. elevated temperature. Expansion refers increase in volume. According to an embodiment, the heat-activatable filler is arranged to expand when exposed to a temperature of 80 degrees C or more. It is preferred to use heat-activatable filler that expands at the lowest possible activation temperature, as less energy will then be needed for the expansion to take place. However, the activation temperature must be high enough to enable drying of the adhesive as part of the label manufacturing process. The heat-activatable filler comprises expandable particles, such as thermoplastic microspheres encapsulating gas. In an example a shell of the thermoplastic microsphere is arranged to soften and the gas is arranged to expand when the microsphere is exposed to heat. As a result, an increase in volume of the microsphere is achieved.

The expandable particles of the heat-activatable filler may have a diameter of from 5 µm to 40 µm in unexpanded state. The particles may be chosen to have a grade with a narrower diameter range, for example 5-24 µm, or 25-40 µm. Low particle diameter may be preferred in order to avoid the unexpanded particles to have a declining effect on the adhesion properties of the adhesive layer. The expandable particles may have a density of from 5 to 30 kg/m³ when expanded.

In an example, the expandable particles have a density of from 12 to 25 kg/m³ when expanded. In an example, in an unexpanded a diameter of the microsphere is about 10 µm and after exposure to heat the diameter is about 40 µm. The expansion of the particles when having been activated may be irreversible. The expandable particles may be solvent resistant.

The heat-removable label 1 may comprise a varnish layer arranged on a top surface of the face layer 2. The varnish may be utilized for example for tuning the printability of the face layer and/or its appearance and/or its tolerance to moisture or wettability (or permeability of water vapour).

The heat-removable label 1 may be top coated. A top coat may be arranged on top of the printing. The purpose of the top coat may be to protect the printing from wear/abrasion and/or enhance the gloss or haze depending on the end use application of the label.

### Face layer

A face layer 2 of a heat-removable label 1 may be natural fibre based, such as coated or uncoated paper, plastic film or a combination of these. The face layer 2 may have a monolayer structure or a multilayer structure. The multilayer structure comprises at least two layers, for example three layers.

According to an embodiment a face layer 2 is natural fibre based. Preferably the face layer 2 is natural fibre based material that can carry print or a printable layer. For face layers 2 a certain degree of hydrophobicity is a preferred property. Hydrophobicity reduces the wettability of the natural fibre based face layer 2. According to an embodiment the face layer 2 comprises or consists of paper.

The paper based face layer 2 may comprise or consist of wet strength paper. Wet strength paper refers to paper wherein the web of fibres holding the paper together resist a force of rupture when the paper is wet. Wet strength of paper may be expressed as a ratio of wet to dry tensile force at break. Various techniques, such as refining of the pulp and wet pressing on the paper machine can be used to reduce the strength loss of the paper upon wetting. Alternatively, the paper based face layer 2 may comprise or consist of thermal paper. Thermal paper refers to a special fine paper that is coated with a material formulated to change colour when exposed to heat. Preferably, a thermal barrier layer is arranged between the thermal paper face layer and the adhesive layer, in order to avoid activation of the thermal paper when drying the adhesive.

Alternatively the face layer 2 may be a plastic film. The face layer 2 may be a plastic film that can carry print or a printable layer. The plastic film may comprise or consist of for example PE (polyethylene), PP or PET. However, the plastic film as the face layer in some cases may not be suitable for the label that is to be removed from the labelled surface by heat. Exposing the label to excessive heat may cause the label face to melt, which is undesired situation. This may happen for example to labels having a PE face. However, in some cases it may be necessary to overheat the label in order to get it removed, thus losing the opportunity for recycling the label materials but securing the recyclability of the item onto which the label has been attached. For example, a focused beam of hot air may be utilized.

The plastic film as the face layer may be one that undergoes a dimensional change such as shrinkage, expansion or curl upon exposure to elevated temperatures. A face layer undergoing curling upon exposure to elevated temperatures may for example be a multilayer face including a first polymeric layer having a first coefficient of thermal expansion, and a second polymeric layer having a second coefficient of thermal expansion underlying the first polymeric layer, wherein the first coefficient of thermal expansion is less than the second coefficient of thermal expansion. The label including such a face layer may be reversibly curled toward the first polymeric layer at elevated temperature. The first and the second polymeric layers may be coextruded. The multilayer face may comprise more than two layers, and all of the layers may be coextruded. A face layer undergoing expansion or shrinkage upon exposure to elevated temperatures may comprise a thermoplastic polymer. Shrinkage results in decrease in the area of the label face layer, whereas expansion results in increase of said area. Dimensional change of the plastic face layer upon exposure to elevated temperatures may be of further help in the removal process of the heat-removable labels disclosed herein. However, in any case the heat-activatable filler of the adhesive layer is the main responsible for the heat-removability of the labels.

The natural fibre based face layer may have a thickness of from 60 to 90 µm. The filmic face layer may have a thickness of from about 20 to 80 µm. Current trend is to decrease the label thickness as much as possible. This represents a sustainable approach, as less materials are used. Further, thinner face layer is easier to heat for detachment of the labels, and thus less energy is needed in the removal process. The natural fibre based face layer may have a grammage of from 60 to 85 g/m². The filmic face layer may have a grammage of from about 30 to 80 g/m².

### Adhesive layer

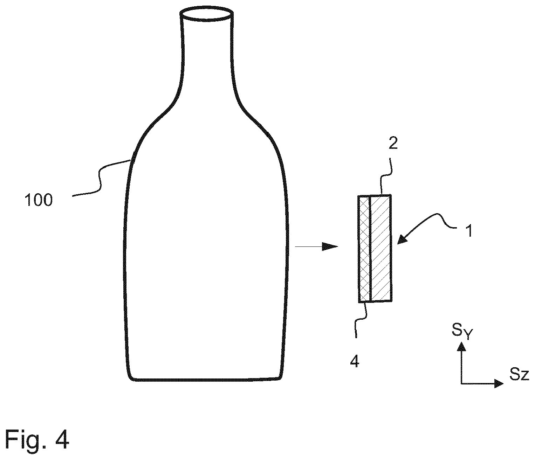

A heat-removable label 1 can be affixed to the surface of an item (article) 100 through an adhesive layer 4 so as to form a labelled item 101, as illustrated in Figs. 3 and 4. Adhesive layer 4 provides adhesion i.e. adheres or bonds the label 1 to the surface of the item 100. The adhesive layer 4 of the label 1 should have a suitable adhesion i.e. tack (stickiness) in order to stick to an item 100 during labelling process. Tack is the property of adhesive that allows the immediate formation of a bond on contact with another surface. The tackiness is needed at the point the label is attached to an item 100. The optimum adhesion between two materials depends on, for example, the wetting and surface energy of the materials. The adhesive may be permanent or removable. Within context of this disclosure the adhesive is pressure sensitive adhesive.

An adhesive layer 4 may be a continuous coating covering 100% of the face layer surface. Alternatively, it may be applied discontinuously as spots or strips covering less than 100% of the face layer surface. This may be called "pattern gumming". For example, the adhesive may cover between 10 to 90% of the total area of the face layer 2. Reduced amount of adhesive may have an effect on reducing the time needed for the subsequent removal of the label from the surface of the item. Reduced amount of adhesive may have an effect on reducing the time and/or lowering the temperature needed for the activation of the heat-activatable filler, i.e. the expansion of the expandable particles, to take place. Thus, easier removal process may be achieved. Reduced amount of the adhesive is also beneficial from the sustainability point of view, since less materials are needed for providing the labels.

An adhesive layer 4 may have a thickness in the range of about 5-40 µm, or in the range of about 5-20 µm. For example, the thickness of the adhesive layer is in the range of about 10-20 µm or 15-20 µm. A coat weight of the adhesive layer, in dry weight, may be in the range of about 5-40 g/m², or 5-20 g/m². The coat weight of the adhesive may be preferably less than 25 g/m², or equal to or less than 20 g/m². For example, the coat weight of the adhesive layer is between 10 and 20 g/m² or between 15 and 20 g/m². End use of the label is determining factor for the adhesive thickness. When the labelled material is rougher, higher adhesive thicknesses are typically needed.

As a rule of thumb, the adhesive coating thickness is related to the coat weight of the adhesive in such a way, that generally coat weight of 1g/m² corresponds to coating thickness of ~ 1 µm or slightly less.

The adhesive layer 4 adjacent to the surface of the item labelled comprises or consists of a pressure sensitive adhesive (PSA). Within context of this specification, the adhesive layer 4 may comprise or consist of a water-based (water-borne) PSA. The adhesive layer 4 may be a monolayer consisting of a single adhesive layer or a multilayer comprising at least two adhesive layers.

Water-based adhesives when compared to solvent-based ones provide better sustainability with less fossil-based raw materials and less volatiles involved both during the manufacturing and during end use.

The water-based adhesive may be an acrylic-based adhesive or a rubber-based adhesive. Acrylic adhesive comprises at least one acrylate polymer. Acrylate polymers are polymerization products, i.e. polymers, prepared from monomers including acrylate monomers. Acrylate polymers may consist of acrylate monomer(s) or comprise also non-acrylic comonomer(s). Acrylate polymers are also known as acrylics or polyacrylates. Rubber-based adhesive can either comprise synthetic rubber or natural rubber.

The adhesive layer 4 comprises a heat-activatable filler. The heat-activatable filler is used for heat induced adhesion change. Activation of the heat-activatable filler reduces adhesion, eventually leading to detachment of the adhesive layer from the surface labelled. Adhesion may be reduced via inducing a change in tackiness of the pressure sensitive adhesive of the label.

The heat-activatable filler being arranged to expand has the effect that the expansion of the particles caused by the heat facilitates removal of the label from the labelled surface. Expanding of the particles may cause lifting of the adhesive and thus the label from the surface it has been adhered to.

The amount of the heat-activatable filler in the adhesive layer 4 may be up to 10 wt.% of the dry weight of the adhesive. The amount of the heat-activatable filler may be for example from 0.1 wt.% to 10 wt.%, such as from 5 to 10 wt.% or from 5 to 8 wt.% of the dry weight of the adhesive.

Adhesion properties of the adhesive layer comprising the heat-activatable filler may be defined by shear resistance, which may be used as an indicator of the adhesive's cohesion, as well as peel adhesion and tack, which are indicators of the adhesive's adhesion.

Shear resistance refers to a measure of an adhesive's vertical holding power, i.e. internal cohesive strength (cohesion) of the adhesive. It is generally measured by arranging a specific surface area of adhesive to a substrate, attaching a known weight to the adhesive and the substrate, and then measuring the time the adhesive would hold the weight. Shear resistance may be measured according to FINAT Test Method No. 8 (FTM 8). A low-shear adhesive (soft) has more of a tendency to flow resulting in higher initial tack. However, low-shear adhesive may have a higher chance of the adhesive being split under stress. A high-shear adhesive (firm) is less likely to split under stress due to its higher internal cohesive strength. The high-shear adhesive may have reduced tendency to flow and thus may have lower initial tack. The pressure sensitive adhesive disclosed herein shows high shear resistance. The adhesive disclosed herein may show an average shear resistance of higher than 100-500 min, for example 200 min, when measured according to FTM 8. Certain cohesion is required to get clean removability, i.e. no adhesive residues on the item after the detachment of the label.

Peel adhesion refers to a measure of the adhesive's ability to wet out a surface of a substrate and subsequently adhere to the substrate. Peel adhesion thus may quantify the permanence of the adhesion or peel ability of the adhesive. Peel adhesion is defined as the force required to remove adhesive coated material from a standard test plate after a certain dwell time at an angle of 90 degrees or 180 degrees and specified speed. Peel adhesion thus refers to final adhesion. Peel adhesion may be measured according to FINAT Test Method No. 1 or 2 (FTM 1, FTM 2).

According to an embodiment, the adhesive has a peel adhesion on PET surface in a range of from 1 to 10 N/25 mm, when measured according to FTM 1 or FTM 2. For example, the adhesive may have an average peel adhesion on PET surface in a range of from 5 to 10 N/25 mm, such as 6.1 N/25 mm.

Tack refers to an adhesive's holding power (adhesion) upon contact with a substrate. An adhesive with high initial tack will grab the substrate quickly. An adhesive with low initial tack will exhibit a low level of adhesion when applied. Tack can be measured by loop tack measurement according to FINAT Test Method No. 9 (FTM 9). The loop tack value of the adhesive is expressed as the force required to separate, at specified speed, a loop of material brought into contact with a specified area of a standard surface. The pressure sensitive adhesive disclosed herein shows tack on glass surface in a range of from 1.5 to 10 N, when measured according to FTM 9. For example, the adhesive may have an average tack on glass in a range of from 5 to 10 N, such as 7.2 N.

After exposure to heat (i.e. after activation of the heat-activatable filler and thus de-activation of the adhesive layer) the adhesive layer may show an average tack on glass surface of below 1 N, preferably even below 0.5 N, for example in a range of from 0.15 to 0.3 N, when measured according to FTM 9.

After exposure to heat the adhesive layer may have an average peel adhesion on metal surface of below 1 N/25 mm, for example in a range of from 0.3 to 0.5 N/25 mm, when measured according to FTM 1 or FTM 2. Average peel adhesion on PET surface may be below 1 N/25 mm, for example in a range of from 0.3 to 0.5 N/25 mm. Average peel adhesion on glass surface may be below 1.5 N/25 mm, for example in a range of from 0.5 to 1 N/25 mm. Low peel adhesion particularly on metal surfaces facilitates the recycling process, as sticking of the once detached labels onto typical metal parts of the recycling apparatuses may be prevented.

The heat-activatable filler may be included in the adhesive layer 4 before drying of the adhesive layer 4. In that case the adhesive is dried in such temperatures that the activation of the heat-activatable filler already while drying is avoided. For example, the adhesive layer comprising the heat-activatable filler may be dried at a temperature of 60 degrees C for about 2 minutes.

Alternatively, the heat-activatable filler may be included in the adhesive layer 4 after drying of the adhesive layer 4 at a conventional drying temperature of about 100 degrees C.

### Primer layer

A primer layer arranged between the face layer 2 and the adhesive layer 4 may be utilized to enhance the adhesion between the face layer 2 and the adhesive layer 4.

With increasing amount of the heat-activatable filler in the adhesive layer 4 the adhesive anchorage to the face layer 2 may be getting worse. Therefore, arranging a primer layer between the face layer 2 and the adhesive layer 4 may enhance the adhesion between the face layer 2 and the adhesive layer 4.

The primer layer may comprise one of the following: thermal wax, cellulose derivative, such as carboxy methyl cellulose (CMC) or modified starch, dextrin, casein, polyvinyl alcohol (PVA), ethylene acrylic acid (EAA), and acrylic polymer (polyacrylate) with high carboxylic acid content. High carboxylic acid content of the acrylic polymer may provide controlled water solubility.

The primer layer may be applied for example by roll coating onto the surface of the face layer.

### Label laminate

According to an embodiment, a label laminate 8 for providing a heat-removable label 1 is provided. The label laminate 8 comprises a face layer 2 and an adhesive layer 4 as described above. The label laminate 8 further comprises a release liner 6. The face layer 2 is adjoined to the release liner 6 via the adhesive layer 4. The face layer 2 is natural fibre based, a plastic film or a combination of these, preferably natural fibre based. The adhesive layer 4 comprises pressure sensitive adhesive and a heat-activatable filler. The heat-activatable filler is capable of reducing adhesion of the heat-removable label when being activated. The heat-removable label 1 manufactured from the label laminate 8 is detachable from a surface of an item by exposing the heat-removable label 1 adhered to the surface of the item to heat such that at the time of detachment, effective temperature experienced by the adhesive layer 4 is at least 80 degrees C or more, the temperature being such that mechanical recyclability of material(s) of the face layer and/or the item is not endangered.

The effective temperature experienced by the adhesive layer may be measured for example by a thermocouple arranged between the surface of the item and the heat-removable label 1.

The label laminate 8 may further comprise a primer layer arranged in between the face layer 2 and the adhesive layer 4.

A method for manufacturing a label laminate 8 comprises arranging a release liner 6 or a face layer 2 as a substrate, coating the substrate with a pressure sensitive adhesive so as to form an adhesive layer 4, and laminating the release liner 6 together with the face layer 2 in such a way that the adhesive layer 4 is arranged in between the face layer 2 and the release liner 6. The method further comprises including a heat-activatable filler into the adhesive layer 4. The method may further comprise arranging a thermal barrier layer between the face layer 2 and the adhesive layer 4, particularly when the face layer 2 is arranged as a substrate.

### Linerless label web

As an alternative to label laminate, the labels according to this disclosure may be manufactured by providing a linerless label web and cutting it to provide distinct labels.

A method for manufacturing a linerless label web comprises arranging a face layer as a substrate and coating the substrate with a pressure sensitive adhesive so as to from an adhesive layer. The method further comprises including a heat-activatable filler into the adhesive layer.

The linerless label web comprises a face layer 2 and an adhesive layer 4 as described above. Typically the linerless label web comprises a release layer on top of the face layer, on opposite side of the face layer when compared to the adhesive layer. The release layer may comprise or consist of a release coating, for example a silicone coating. The release coating enables the linerless label web to be rolled on itself without the superposed label web turns on the roll sticking onto each other. Further, the linerless label web may comprise a thermal barrier layer arranged between the face layer 2 and the adhesive layer 4.

The face layer 2 is natural fibre based, a plastic film or a combination of these, preferably natural fibre based. The adhesive layer 4 comprises pressure sensitive adhesive and a heat-activatable filler. The heat-activatable filler is capable of reducing adhesion of the heat-removable label when being activated. The heat-removable label 1 manufactured from the linerless label web is detachable from a surface of an item by exposing the heat-removable label adhered to the surface of the item to heat such that at the time of detachment, effective temperature experienced by the adhesive layer is at least 80 degrees C or more. The effective temperature is such that mechanical recyclability of material(s) of the face layer and/or the item is not endangered.

### Recycling process

Labels according to this disclosure are intended for labelling of items which items, typically containers, are to be recycled mechanically. Additionally, the removed labels may be recycled mechanically or according to any suitable recycling process.

Mechanical recyclability of a specific item is determined by the recyclability of the different components of the item and their combination in a specific recycling stream. Before being able to determine the recyclability of a specific item, such as a package, the recyclability of each of the components needs to be assessed. Mechanical recycling places stricter demands on the contents of the recycling stream when compared to the chemical recycling, which is a process wherein a polymer is broken down to its original monomer form so that it can eventually be processed (re-polymerized) and remade into new materials. However, mechanical recycling process may be more efficient in terms of energy and chemicals' consumption when compared to the chemical one.

Mechanical recycling of plastic items in general refers to methods where plastic items are heated up and mixed into recycled plastic material which can be used again for manufacturing of new plastic items. Mechanical recycling creates secondary raw materials or products without significantly changing the chemical structure of the material. In principle, all types of thermoplastics may be mechanically recycled with little or no quality impairment. Before recycling, plastics may be sorted according to their resin type. After sorting, the plastic recyclables may be shredded. These shredded fragments then undergo processes to eliminate impurities. The material is melted and typically extruded into the form of pellets which are then used to manufacture other products.

An exemplary recycling process of for example labelled plastic items, such as bottles or other containers, may be as follows. The labelled plastic items are first collected from waste streams. After that, the labelled item is exposed to sorting. In sorting the plastic waste is sorted by polymer type and/or colour. The sorting process may include manual and/or automated detection and separation of the polymer type and/or colour. The detection and separation may rely on technologies such as density separation, electrostatic separation or sensor-based separation. The sensor-based separation or sorting can be highly automated and involve various types of sensors linked to a computer, which analyses items and directs them into appropriate chutes or belts. Nearinfrared (NIR) spectroscopy may be used to distinguish between polymer types. Optical sorting may be used for organising the items by colour.

After collection and sorting, the labelled items may be shredded. In some cases, the labelled items may be pre-washed. After that, a mixing and heating step follows. The mixing and heating step comprises heating and mixing of the (shredded) materials. The heated and mixed materials may be extruded in order to provide a melt stream. The melt stream may then be filtered and degassed. In the final, pelletizing step the melt stream may be pelletized so as to produce recycled plastic as an output.

In typical washing and separation processes relating to the recycling of plastic items, such as bottles, the plastic items are exposed to a caustic washing solution and the items in the washing solution are agitated at elevated temperature. The plastic items are typically crushed into flakes before exposing them to the washing solution. After that, the items/flakes are rinsed so as to remove the washing solution. Then, after settling of the material the system comprises floating material on a surface of the rinsing liquid as well as material that has a density higher than the one of the rinsing liquid, thus sinking to the bottom. Thus, the floating material may be separated from the sank material. The sank material typically contains the recyclable plastic items/flakes.

Labels, and especially the pressure sensitive adhesives of the labels are known to cause problems if entering into polyethylene terephthalate (PET) mechanical recycling processes. Materials either in the face of the labels or in the adhesive are prone to reducing the value of the recycled PET if the labels are not removed properly and prevented entering into the recycled PET stream. The paper or filmic face, printing ink and adhesive may all contaminate the recycled PET thus causing off-colour and haze. For example labels comprising a polypropylene (PP) face are not compatible with PET and will cause haze at as little as 10 ppm content. Pressure sensitive adhesives, for one, may degrade during melting of PET and thus cause discoloration of recycled PET to a yellow-brown shade. Also the ink binders and pigments of the label may cause discoloration of PET. In a case the printing ink does not remain adhered to the label materials in the recycling process, the ink may contaminate the washing solution and thus stain the recycled PET.

Paper labels in PET or polystyrene (PS) recycling may form pulp which is very difficult to filter from the washing solution, thereby adding significant load to the filtering and water treatment systems. Individual paper fibres making up the pulp are very small and difficult to remove. Paper fibres ending up into the material to be recycled carbonize during heating and re-melting of the material, thus causing degradation of quality and a burnt odour to the recycled polymer. Paper labels that do not show pulping, for one, resist the caustic washing process and sink to the bottom of the float-sink tank, thereby causing contamination of the polymer to be recycled and/or end up into the sludge, thus causing extra costs related to the treatment of the sludge.

The above discussed problems caused by the labels in the recycling processes may be avoided by the heat-removable label and the removal method disclosed herein. The disclosure provides economical and sustainable removal of the labels before recycling of the labelled items and materials. Further, the disclosure provides an efficient solution for recycling of the labels themselves.

According to an embodiment, a method for removing a heat-removable label from a surface of an item is disclosed. The method comprises exposing the heat-removable label adhered to the surface of the item to heat such that at the time of detachment, effective temperature experienced by the adhesive layer is at least 80 degrees C or more, so as to detach the heat-removable label from the surface of the item.

The primary heat transfer process to remove the label is utilized substantially without liquid transferred heat transfer, for example via heated gas or heat radiation. Definition "substantially without liquid transferred heat transfer" herein means that the primary heat transfer process is at least for the most part or essentially, or even completely liquid-free. Therefore, the label removal process does not comprise for example submerging the item with the label adhered thereon into a liquid or exposing them for example to steam tunnel conditions. Thus, exposure of the heat-removable label adhered to the surface of the item to heat may be performed under dry conditions.

As mentioned earlier, the effective temperature experienced by the adhesive layer at the time of detachment may be measured by a thermocouple arranged between the surface of the item and the heat-removable label.

The heat-removable label comprises a face layer and an adhesive layer. The face layer is natural fibre based, a plastic film or a combination of these, preferably natural fibre based. The adhesive layer comprises pressure sensitive adhesive and a heat-activatable filler. The heat-activatable filler is capable of reducing adhesion of the heat-removable label when being activated.

The item may be a semi-rigid or rigid container having a wall thickness of at most 1 mm. For example, the wall thickness of the container may vary from 0.2 to 1 mm. The item may be for example a bottle. The item or at least the surface of the item onto which the label has been adhered to in a labelling process may be composed of plastics. Preferably the plastics is chosen from PET, HDPE or PP. Alternatively, the item may be composed of glass.

The effective temperature experienced by the adhesive layer at the time of detachment is such that mechanical recyclability of material(s) of the face layer and/or the item is not endangered. This means that the removal of the label by exposure to heat is achieved without significantly altering chemically the face layer and/or the item. Mechanical recyclability of the materials of the face layer and/or the item may be considered to be endangered for example in a case the quality of the recycled fraction is lowered and/or compromised. Quality of the recycled fraction may refer to odour, colour, processability, mechanical properties and/or optical properties. For example, the item and/or the label materials should not melt at the chosen temperature and during the time period needed for the label removal. PE bottle, for example, has been shown to melt together with the adhesive layer at 140 degrees C. However, as already mentioned, in some cases it may be necessary to overheat the label in order to get it removed, thereby losing the opportunity for recycling the label materials but securing the recyclability of the item onto which the label has been detached. For example, a focused beam of hot air may be utilized.

Further, adhesive transfer from the label to the item should not take place during the removal process. In other words, clean removability of the labels is desired for. For example, adhesive transfer from the label face to a PP/PE bottle has shown to take place at 120 degrees C. Adhesive remnants in the item may compromise quality of the recycled fraction comprising the item materials, as chemically incompatible components may cause different phases to form, which may be visually detected as an increased haze of the material produced by the recycling process. Further, the adhesive remnants on the recyclable item may cause undesired colour or smell to the recycled material. Moreover, the adhesive remnants may be responsible for burnt particles and/or discoloration.

The detachment of the heat-removable label from the surface of the item may take place in a time period of from 30 seconds to 3 minutes.

Effective temperature experienced by the adhesive layer at the time of detachment may be from 80 to 120 degrees C, from 90 to 120 degrees C, from 100 to 120 degrees C, or from 110 to 120 degrees C. Utilization of dry conditions for removal enables use of higher temperature and thus faster removal process for example compared to traditional washing process.

The heat-removable label may be exposed to heat using at least one of the following: radiation based heat transfer, conductive based heat transfer or convective heat transfer. Examples of radiation based heat transfer are, for example, infrared (IR) or microwave heating. Convective heat transfer can be based on heated gas or air.

Preferably convective heat transfer is based on hot air flow. This presents a sustainable choice, as less energy is needed for providing hot air flow compared to e.g. microwave or other radiative heat transfer. Hot air flow is also less sensitive to the materials, i.e. is in practice suitable for all kinds of materials. The hot air flow may comprise dry air. Alternatively, the hot air flow may comprise moist air. However, dry air as being a more cost-efficient solution is preferred. In this context, with dry air it is meant air collected from the surroundings/nearby atmosphere and then heated up using a suitable heating method. Naturally such air still may contain some amount of moisture but it has not been specially dried but used as such as collected from the surroundings/atmosphere and then having been heated up with. Such heated air may also become formed of or include air and gases from a combustion process, i.e. air being used as oxidiser in a combustion process and then used for the removal process. Therefore, "air" does not necessarily here refer to the exact original gas composition, for example, that of natural atmosphere. In principle, moisture contained by the moist air may be advantageous for the heat transfer. However, moist air may be more expensive to produce when compared to dry air.

The heat removability of the label may be further enhanced with additional mechanical (blowing, brushing) or liquid (washing, jetting) aids. However, preferably the heat-removable label disclosed herein is self-detachable from a surface of an item by exposing to heat by using convective heat transfer based on hot air flow. Term "self-detachable" means that the label detaches from the surface of the item solely by the exposure to heat, preferably by using hot air flow, and no additional mechanical or liquid aids are needed for the removal.

Preferably, the removal of the labels from the items takes place before sorting of the items, namely before detection of the item material, i.e. the polymer type. As the label has been removed from the item before the detection process, the label material does not affect the detection process, but the item material is correctly detected. Thus, detection and sorting with better accuracy is achieved. Eventually this leads to improved quality of the recycled material. Use of metallic labels is enabled by using the solution disclosed herein, since when being removed before detection of the item material they do not interfere with the detection process.

The hot air flow used for the removal by heat may also be exploited for blowing the detached labels away from the items. In case the density of the detached labels is such that the labels float on a surface of water, the detached and floating labels may be separated from the sinking items in water by a density separation process. In particular, as no washing treatment is required at this stage, it is possible to utilize cold, i.e. unheated, water without caustics or any other cleaning agents, thus ensuring environmentally and economically feasible way for label detachment and separation.

Once the labels have been removed from the items by heat, the labels are not anymore sticky. This is caused by the activation of the heat-activatable filler of the adhesive layer. The action of the heat-activatable filler is irreversible, and therefore the detached labels remain non-sticky. This makes the recycling process of the labels itself easier, as the labels do not stick to each other. Neither do the labels stick to the parts of the recycling machinery, thus facilitating the process.

The heat-removable label and the method of removal thereof disclosed herein provides an energy-efficient, economical and sustainable solution for labelling technology. The removal process is energy-efficient, economical and sustainable, as the energy needed in the dry removal process utilizing heat for the removal is much less compared for example to the traditional process utilizing caustic washing solution for the label removal. Heating the air needed for the removal requires less energy than heating the washing solution. Further, removal by the heated air does not create any further waste material, whereas in the caustic washing process the used washing liquid has to be handled in appropriate manner.

Besides in industrial scale recycling processes, the heat-removable label disclosed herein is fit to small scale recycling taking place for example at households or local stores with any suitable heat source, such as a hairdryer, a microwave, a dishwasher or hot water. This supports proper recycling of various containers.

### Examples

Heat-removability of labels disclosed herein from containers (bottles) made of different materials was tested.

The heat-removable labels tested had a natural fibre based (paper) face layer and a water-based acrylic adhesive. Thickness of the face layer was 60 µm and grammage 68 g/m². The adhesive layer had a coat weight of 20 g/m². The adhesive layer comprised heat-activatable filler in an amount of 7.9 wt.% of dry weight of the adhesive. The expandable particles of the heat-activatable filler had a diameter of 10 µm in unexpanded state. The heat-activatable filler was one that is arranged to expand when exposed to a temperature of 80 degrees C or more. All of the tested bottles had a wall thickness of at most 1 mm.

Heat-removability tests were performed in a heating tunnel. Various bottles each having a heat-removable label as disclosed above adhered onto its surface were fed into the heating tunnel. A thermocouple had been arranged between the surface of the bottle and the heat-removable label. Time needed for the label to fall off (i.e. 100% detachment or removal) was observed. Further, temperature measured by the thermocouple at the time of detachment was detected.

In the first experiment set-up temperature of the heating tunnel was 100 degrees C. Results are shown in Table 1. Variation in time and temperature measured by the thermocouple shows variation between distinct experiments.

**Table 1.**

| **Bottle** | **Time [s]** | **Set-up T of the heating tunnel [°C]** | **T measured by thermocouple [°C]** |
|---|---|---|---|
| PET 500 ml | 62 - 75 | 100 | 91.1 - 97.8 |
| PET 350 ml | 54-58 | 100 | 86.2 - 86.7 |
| HDPE | 180 | 100 | 89.4 - 95.7 |
| PP | 115 | 100 | 101.7 |

The second experiment was performed in a heating tunnel having a set-up temperature of 120 degrees C. Results of that experiment are shown in Table 2.

**Table 2.**

| **Bottle** | **Time [s]** | **Set-up T of the heating tunnel [°C]** | **T measured by thermocouple [°C]** |
|---|---|---|---|
| PET 500 ml | 30 - 35 | 120 | 72.7 - 93.3 |
| PET 350 ml | 30-34 | 120 | 68.8 - 82.7 |
| HDPE | 103 - 116 | 120 | 93.3-106.2 |
| PP | 55 | 120 | 97.7 |

From the above experiments it is clear that the time and the temperature needed for the complete removal of the heat-removable label is dependent of the material of the item onto which the label has been adhered to. Further, the mass of the item may also play a role, as can be seen comparing the results of the PET 500 ml and 350 ml bottles. Specific heat capacities of typical containers may vary in a range of 1300-1900 J/°C·kg. Label size seems to be irrelevant, at least in case of realistic label sizes. The heat capacity of a label is a lot smaller compared to that of the container.

## Claims

1. A heat-removable label (1) comprising a face layer (2) and an adhesive layer (4), wherein
the adhesive layer (4) comprises pressure sensitive adhesive and a heat-activatable filler,
the heat-activatable filler is capable of reducing adhesion of the heat-removable label (1) when being activated, and
the heat-removable label (1) is detachable from a surface of an item by exposing the heat-removable label adhered to the surface of the item to heat such that at the time of detachment, effective temperature experienced by the adhesive layer is at least 80 degrees C or more, the effective temperature being such that mechanical recyclability of material(s) of the face layer and/or the item is not endangered.

2. The heat-removable label (1) according to claim 1, wherein the face layer (2) is natural fibre based.

3. The heat-removable label (1) according to claim 1, wherein the face layer (2) is filmic.

4. The heat-removable label (1) according to any of the preceding claims, wherein adhesive layer (4) comprises from 0.1 to 10 wt.% of heat-activatable filler (dry weight).

5. The heat-removable label (1) according to any of the preceding claims, wherein the item is a semi-rigid or rigid container having a wall thickness of at most 1 mm.

6. The heat-removable label (1) according to any of the preceding claims, wherein the item is composed of PET, HDPE or PP.

7. The heat-removable label (1) according to any of the preceding claims, wherein the heat-removable label (1) is detachable from the surface of the item in a time period of from 30 seconds to 3 minutes.

8. The heat-removable label (1) according to any of the preceding claims, wherein the effective temperature experienced by the adhesive layer at the time of detachment is from 80 to 120 degrees C.

9. The heat removable label (1) according to any of the preceding claims, wherein the heat-removable label (1) is detachable from a surface of an item by exposing the heat-removable label adhered to the surface of the item to hot air flow.

10. A label laminate (8) for providing a heat-removable label (1), the label laminate (8) comprising a face layer (2), an adhesive layer (4) and a release liner (6), the face layer (2) being adjoined to the release liner (6) via the adhesive layer (4), wherein
the adhesive layer (4) comprises pressure sensitive adhesive and a heat-activatable filler,
the heat-activatable filler is capable of reducing adhesion of the heat-removable label (1) when being activated, and
the heat-removable label (1) is detachable from a surface of an item by exposing the heat-removable label adhered to the surface of the item to heat such that at the time of detachment, effective temperature experienced by the adhesive layer is at least 80 degrees C or more, the effective temperature being such that mechanical recyclability of material(s) of the face layer and/or the item is not endangered.

11. A method for manufacturing a label laminate (8) according to claim 10, the method comprising the following steps of:
- arranging a release liner (6) or a face layer (2) as a substrate,
- coating the substrate with a pressure sensitive adhesive so as to form an adhesive layer (4) and
- laminating the release liner (6) together with the face layer (2) in such a way that the adhesive layer (4) is arranged in between the face layer (2) and the release liner (6),
wherein the method further comprises including a heat-activatable filler into the adhesive layer (4).

12. A linerless label web for providing a heat-removable label (1), the linerless label web comprising a face layer (2) and an adhesive layer (4), wherein
the adhesive layer (4) comprises pressure sensitive adhesive and a heat-activatable filler,
the heat-activatable filler is capable of reducing adhesion of the heat-removable label (1) when being activated, and
the heat-removable label (1) is detachable from a surface of an item by exposing the heat-removable label adhered to the surface of the item to heat such that at the time of detachment, effective temperature experienced by the adhesive layer is at least 80 degrees C or more, the effective temperature being such that mechanical recyclability of material(s) of the face layer and/or the item is not endangered.

13. A method for manufacturing a linerless label web according to claim 12, the method comprising the following steps of:
- arranging a face layer (2) as a substrate,
- coating the substrate with a pressure sensitive adhesive so as to form an adhesive layer (4), and
- including a heat-activatable filler into the adhesive layer (4).

14. A method for removing a heat-removable label (1) according to any of the claims 1-9 from a surface of an item, the method comprising exposing the heat-removable label (1) adhered to the surface of the item to heat such that at the time of detachment, effective temperature experienced by the adhesive layer is at least 80 degrees C or more, the effective temperature being such that mechanical recyclability of material(s) of the face layer and/or the item is not endangered, so as to detach the heat-removable label (1) from the surface of the item.

15. The method according to claim 14, wherein the detachment of the heat-removable label (1) from the surface of the item takes place in a time period of from 30 seconds to 3 minutes.

16. The method according to claim 14 or 15, wherein the effective temperature experienced by the adhesive layer at the time of detachment is from 80 to 120 degrees C.

17. The method according to any of the claims 14-16, wherein the heat-removable label (1) being adhered to the surface of the item is exposed to hot air flow.

18. The method according to any of the claims 14-17, wherein the method is part of a mechanical recycling process and the removal of the heat-removable label (1) from the surface of the item takes place prior to detection of the item material.

19. A labelled item (101) comprising an item (100) and a heat-removable label (1) according to any of the claims 1-9, wherein the heat-removable label (1) is attached to a surface of the item through the adhesive layer (4) of the heat-removable label.

20. Use of a heat-removable label (1) according to any of the claims 1-9 for labelling an item (100).

21. Use of a label laminate (8) according to claim 10 or a linerless label web according to claim 12 for providing heat-removable labels (1).
